(19) Europäisches Patentamt / European Patent Office / Office européen des brevets

(11) **EP 1 771 488 B1**

(12) **EUROPÄISCHE PATENTSCHRIFT**

(45) Veröffentlichungstag und Bekanntmachung des Hinweises auf die Patenterteilung:
**27.08.2008 Patentblatt 2008/35**

(21) Anmeldenummer: **05762335.7**

(22) Anmeldetag: **12.07.2005**

(51) Int Cl.:
*C08F 265/06* (2006.01)

(86) Internationale Anmeldenummer:
**PCT/EP2005/007513**

(87) Internationale Veröffentlichungsnummer:
**WO 2006/010465 (02.02.2006 Gazette 2006/05)**

(54) **PLASTISOLE MIT VERRINGERTER WASSERAUFNAHME**

LOW WATER-ABSORPTION PLASTISOL POLYMERS

PLASTISOL A ABSORPTION D'EAU REDUITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.07.2004 DE 102004035937**

(43) Veröffentlichungstag der Anmeldung:
**11.04.2007 Patentblatt 2007/15**

(73) Patentinhaber: **Evonik Röhm GmbH
64293 Darmstadt (DE)**

(72) Erfinder:
• SCHATTKA, Jan, Hendrik
  **63454 Hanau (DE)**
• LÖHDEN, Gerd
  **63457 Hanau (DE)**

(56) Entgegenhaltungen:
EP-A- 1 162 217          US-A- 3 970 725
US-A- 5 539 073

**Beschreibung**

Die vorliegende Erfindung betrifft pulverförmige Kern/Schale-Polymerisate zur Herstellung eines Plastisols, die eine überraschend geringe Wasseraufnahme aufweisen.

Weiterhin betrifft die Erfindung die aus diesen Polymerisaten hergestellten Plastisolpasten, welche ebenfalls eine geringe Wasseraufnahme aufweisen und darüberhinaus eine gute Lagerstabilität, gute mechanische Eigenschaften und eine gute Weichmacherverträglichkeit besitzen.

Dispersionen von feinteiligen Polymerpulvern in Weichmachern, so genannte Plastisole, werden industriell in großem Umfang angewendet, meist unter Zusatz von weiteren Bestandteilen wie Füllstoffen, und Pigmenten. Insbesondere Plastisole auf Basis von Polyvinylchlorid (PVC) werden in größerem Umfang zur Beschichtung angewendet beispielsweise zum Korrosionsschutz von Metallen, insbesondere Unterbodenschutz und Karosserieversiegelung von Automobilen; andere Beispiele sind Beschichtung von Tapeten oder Teppichbodenrückseiten.

Über längere Zeit hin haben Beschichtungen und Beläge aus Polyvinylchlorid (PVC) auf dem Markt aufgrund ihrer vielseitigen Anwendbarkeit und ihrer guten Gebrauchseigenschaften eine überragende Rolle gespielt, insbesondere weil die Polymerteilchen vom Plastifiziermittel nicht angequollen werden oder sich in ihm auflösen, während die Plastisolpaste gelagert wird (Lagerstabilität) und weil nach der Gelierung der Plastisole durch Erhitzen, der Weichmacher vom gebildeten Film zurückgehalten wird und nicht im Laufe der Zeit aus dem gebildeten Film freigesetzt wird ("ausschwitzt")

In jüngster Zeit zeichnet sich die Tendenz ab, PVC durch andere Werkstoffe zu substituieren. Gründe dafür sind unter anderem Umweltaspekte und das Verhalten der Polymeren im Brandfall. Neben der Freisetzung von halogenhaltigen Brandgasen, die zu schweren Verletzungen führen können, sind insbesondere die negativen Wirkungen in Bezug auf sauren Regen und die Möglichkeit der Dioxinbildung zu nennen.

Bei allen derartigen Bemühungen hatte jedoch zu gelten, dass die Praxis nicht bereit war, bei Ersatzprodukten für PVC-Polymere drastische Abstriche an der Qualität hinzunehmen, die man von PVC-Produkten gewohnt war.

Es wurde daher vorgeschlagen, als Ersatzstoffe Polymere auf Basis von Polyurethanen, Epoxiden, Silikonen, etc. zu verwenden, um die PVC-Polymeren zu substituieren. Diese besitzen jedoch den Nachteil, dass die bestehenden Produktionsanlagen für Polyvinylchloridplastisole nicht verwendet werden können und daher bei Verwendung dieser Polymeren nicht unerhebliche Investitionskosten anfallen würden. Weiterhin besitzen diese Ersatzpolymeren weitere Nachteile wie unzureichende Lagerstabilität, Toxizität oder hohe Produktionskosten. Es bestand daher die Aufgabe, geeignete Substitutionsprodukte für Vinylchloridpolymere aufzufinden.

So wurde z. B. vorgeschlagen, Vinylchloridpolymere zumindest teilweise durch Acrylpolymere zu ersetzen (JP-A 60-258241, JP-A 61-185518 und JP-A 61-207418). Hierdurch wird jedoch nicht der entscheidende Nachteil vermieden, die Freisetzung von toxischen Gasen im Brandfall zu vermeiden.

JP-A-5-255563 offenbart zwar ein halogenfreies Acrylpolymer, die damit hergestellten Plastisole sind jedoch in ihren Eigenschaften sehr unbefriedigend in Bezug auf Lagerstabilität und Rückhaltevermögen des Weichmachers.

Es wurde daher versucht, Acrylpolymere herzustellen, die Van der Waals-Kohäsionskräfte besitzen, die etwa denen von PVC entsprechen. Hierbei wurde jedoch festgestellt, dass eine hohe Verträglichkeit zwischen Polymer und Weichmacher auch zu einer verstärkten Gelierung führt, was eine schlechte Lagerstabilität bedeutet. Herabsetzung der Verträglichkeit zwischen Polymer und Weichmacher führt jedoch dazu, dass dieser nicht mehr in genügender Weise im gebildeten Film zurückgehalten wird und im Laufe der Zeit herausmigriert.

JP-A-5-279539 sowie die EP-A-1 162 217 offenbaren Kern/Schale-Polymerisate auf Basis von (Meth)acrylaten, die Carbonsäure-, Carbonsäureanhydrid- oder Sulfonsäure-Gruppen enthalten. Durch diese Gruppen wird jedoch sowohl die Verträglichkeit mit dem Weichmacher als auch die Wasseraufnahme negativ beeinflusst.

Die gleichen Nachteile besitzen Kern/Schale-Polymerisate, die gemäß der JP-A-6-322225 hergestellt werden, indem die Estergruppen an der Oberfläche der Latexteilchen zumindest teilweise in einer polymeranalogen alkalischen Hydrolyse in Carbonsäuregruppen überführt werden.

Die japanischen Anmeldungen JP-A-53144950, JP-A-7-233299 und JP-A-8-295850 offenbaren Kern/Schale-Polymerisate, bei denen Kern und Schale unterschiedlich zusammengesetzte Polymere besitzen, wobei diese jeweils für bestimmte Eigenschaften, z. B. Lagerstabilität, optimiert sind. Die damit gebildeten Filme weisen jedoch ebenfalls nur unbefriedigende Eigenschaften auf.

Ein generelles Problem bei den Plastisolen besteht in der Wasseraufnahme des Polymerpulvers oder der ungelierten Plastisolpaste. Bei der Gelierung der Plastisolpaste bei Temperaturen von üblicherweise über 100°C verdampft dieses Wasser und führt zu unerwünschter Blasenbildung im fertigen Film.

Um akzeptable mechanische Eigenschaften und Weichmacherverträglichkeit des fertigen Plastisolfilmes zu erreichen sind in der Regel hohe Gehalte von Methacrylaten mit längeren Alkylketten (z.B. Butylmethacrylat) erforderlich. Um andererseits wiederum eine akzeptable Lagerstabilität zu erreichen müssen säurehaltige Monomere in der Schale eingesetzt werden. Letztere bewirken jedoch eine erhöhte Wasseraufnahme, verschlechtern die Beständigkeit gegen mechanische Belastung (z.B. Steinschlag) und verringern die Kälteflexibilität.

Es bestand daher die Aufgabe, Acrylpolymerisate auf Basis von (Meth)acrylaten mit Kern/Schale-Aufbau zur Verfügung zu stellen, die sowohl eine gute Lagerstabilität als auch ein gutes Weichmacher-Rückhaltevermögen bei gleichzeitig geringer Wasseraufnahme aufweisen. Außerdem sollten die gelierten Plastisole eine gute Abriebsbeständigkeit gegen Steinschlag zeigen und eine gute Kälteflexibilität besitzen.

Gelöst werden diese sowie weitere nicht explizit genannten Aufgaben, die jedoch aus den hierin einleitend diskutierten Zusammenhängen ohne weiteres ableitbar oder erschließbar sind, durch Kern/Schale-Polymere mit allen Merkmalen des Patentanspruchs 1. Zweckmäßige Abwandlungen der erfindungsgemäßen Kern/Schale-Polymere werden in den auf Anspruch 1 rückbezogenen Unteransprüchen, unter Verwendung der erfindungsgemäßen Polymeren hergestellte Plastisole werden in den Ansprüchen 9 - 10 unter Schutz gestellt. Hinsichtlich des Verfahrens zur Herstellung sowie der Verwendung liefern die Ansprüche 11 bis 13 eine Lösung der zugrunde liegenden Aufgabe.

Es war überraschend, dass die Kern/Schale-Polymerisate eine derart geringe Wasseraufnahme von weniger als 3 % aufweisen, wenn sie die erfindungsgemäße Zusammensetzung aufweisen.

Insbesondere weisen die erfindungsgemäßen Polymere eine vorteilhafte Kombination aus guter Lagerstabilität, guter Weichmacherverträglichkeit, guten mechanischen Eigenschaften und geringer Wasseraufnahme auf.

Detaillierte Beschreibung der Erfindung:

Die Kern/Schale-Polymerisate der vorliegenden Anmeldung bestehen aus Latexteilchen, die eine Primärteilchengröße von mindestens 250 nm, bevorzugt von mindestens 500 nm und besonders bevorzugt von mindestens 700 nm besitzen. Unter Primärteilchengröße wird hierbei der Durchmesser eines einzelnen, in der Regel annähernd sphärischen und nicht agglomerierten Polymerteilchens verstanden, welches als Produkt bei der Emulsionspolymerisation erhalten wird. Üblicherweise wird für diese Größe ein mittlerer Teilchendurchmesser angegeben, welcher beispielsweise durch Laserbeugung bestimmt werden kann.

Die Latexteilchen der vorliegenden Anmeldung bestehen aus einem Kern und mindestens einer Schale, welche in mindestens zwei separaten Schritten nacheinander hergestellt werden. In der Regel besitzen der Kern und die Schale(n) jeweils eine unterschiedliche Zusammensetzung.

Wenn hier der Begriff "Schale(n)" verwendet wird, soll dies bedeuten, dass sich die betreffende Aussage entweder auf eine Schale oder gegebenenfalls auf mehrere vorliegende Schalen beziehen kann.

Die erste Komponente des Kerns ist Methylmethacrylat. Diese Komponente liegt zu mindestens 20 Mol-% vor und beträgt maximal 85 Mol-%. Der Anteil des Methylmethacrylats kann auch 30 bis 70 Mol-% oder 40 bis 60 Mol-% betragen.

Als weitere Komponente enthält der Kern der Latexteilchen einen oder mehrere (Meth)acrylester, dessen Alkoholkomponente 2 - 8 Kohlenstoffatomen oder einen aromatischen Rest enthält.

Die Schreibweise (Meth)acrylester oder (Meth)acrylat kann im Rahmen dieser Anmeldung sowohl Methacrylester bzw. Methacrylat, wie z. B. Methylmethacrylat, Ethylmethacrylat usw., als auch Acrylester bzw. Acrylat, wie z. B. Methylacrylat, Ethylacrylat usw. oder gegebenenfalls eine Mischung aus beiden bedeuten.

Beispiele für derartige Ester sind (Meth)acrylate, die sich von gesättigten Alkoholen ableiten, wie Ethyl(meth)acrylat, n-Propyl(meth)acrylat, iso-Propyl(meth)acrylat, n-Butyl(meth)acrylat, i-Butyl(meth)acrylat, tert-Butyl(meth)acrylat, Pentyl(meth)acrylat, Hexyl(meth)acrylat und Heptyl(meth)acrylat; Ethylhexyl(meth)acrylat, Octyl(meth)acrylat, isoOctyl(meth)acrylat, Cycloalkyl(meth)acrylate, wie Cyclopentyl(meth)acrylat und Cyclohexyl(meth)acrylat; (Meth)acrylate, die sich von ungesättigten Alkoholen ableiten, wie 2-Propinyl(meth)acrylat und Allyl(meth)acrylat, Vinyl(meth)acrylat Aryl(meth)acrylate, wie Benzylmethacrylat oder Phenylmethacrylat, wobei die Arylreste jeweils unsubstituiert oder bis zu vierfach substituiert sein können;

In einer besonderen Ausführungsform ist die Komponente b) des Kerns der Latexteilchen entweder n-Butyl(meth)acrylat, i-Butyl(meth)acrylat oder tert.-Butyl(meth)acrylat oder eine Mischung hieraus.

Diese Ester können zu 15 - 80 Mol-%, zu 30- 70 oder zu 40 - 60 Mol-% vorliegen.

Als weiterer Bestandteil können die Kerne der Latexteilchen 0 - 30 Mol-%, 0 - 20 Mol-%, 0 -10 Mol-%, oder 0 - 5 Mol-% von einem oder mehreren copolymerisierbaren Monomeren enthalten. Die Anwesenheit dieser Monomeren kann in besonderen Fällen günstig sein, um gegebenenfalls bestimmte Eigenschaften des Kerns der Latexteilchen gezielt einzustellen.

Ausgenommen werden N-haltige Verbindungen. Überraschend wurde gefunden, dass Latexteilchen, die keine stickstoffhaltigen Verbindungen im Kern enthalten, eine verbesserte Kälteflexibilität aufweisen. Möglich sind alle ethylenisch ungesättigten Verbindungen, die unter den gegebenen Polymerisationsbedingungen in das Polymer eingebaut werden können, das den Kern bildet.

Hierzu gehören unter anderem

Glycoldimethacrylate, wie 1,4-Butandiolmethacrylat, 2-Butoxyethylmethacrylat, 2-Ethoxyethoxymethylmethacrylat, 2-Ethoxyethylmethacrylat,

Methacrylate von Etheralkoholen, wie
Tetrahydrofurfurylmethacrylat,
Vinyloxyethoxyethylmethacrylat,
Methoxyethoxyethylmethacrylat,
1-Butoxypropylmethacrylat,
1-Methyl-(2-vinyloxy)ethylmethacrylat,
Cyclohexyloxymethylmethacrylat,
Methoxymethoxyethylmethacrylat,
Benzyloxymethylmethacrylat,
Furfurylmethacrylat,
2-Butoxyethylmethacrylat,
2-Ethoxyethoxymethylmethacrylat,
2-Ethoxyethylmethacrylat,
Allyloxymethylmethacrylat,
1-Ethoxybutylmethacrylat,
Methoxymethylmethacrylat,
1-Ethoxyethylmethacrylat,
Ethoxymethylmethacrylat;
Oxiranylmethacrylate, wie
2,3-Epoxybutylmethacrylat,
3,4-Epoxybutylmethacrylat,
Glycidylmethacrylat;
Phosphor-, Bor- und/oder Silicium-haltige Methacrylate, wie
2-(Dimethylphosphato)propylmethacrylat,
2-(Ethylenphosphito)propylmethacrylat,
Dimethylphosphinomethylmethacrylat,
Dimethylphosphonoethylmethacrylat,
Diethylmethacryloylphosphonat,
Dipropylmethacryloylphosphat;
schwefelhaltige Methacrylate, wie
Ethylsulfinylethylmethacrylat,
4-Thiocyanatobutylmethacrylat,
Ethylsulfonylethylmethacrylat,
Thiocyanatomethylmethacrylat,
Methylsulfinylmethylmethacrylat,
Bis(methacryloyloxyethyl)sulfid;
Trimethacrylate, wie
Trimethyloylpropantrimethacrylat;
Vinylester, wie Vinylacetat;
Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol; Heterocyclische Vinylverbindungen, wie 9-Vinylcarbazol, 3-Vinylcarbazol, 4-Vinylcarbazol, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether;
Maleinsäurederivate, wie beispielsweise Diester der Maleinsäure, wobei die Alkoholreste 1 bis 9 Kohlenstoffatome aufweisen, Maleinsäureanhydrid, Methylmaleinsäureanhydrid, Fumarsäurederivate, wie beispielsweise Diester der Fumarsäure, wobei die Alkoholreste 1 bis 9 Kohlenstoffatome aufweisen;
Diene wie beispielsweise Divinylbenzol.

Alpha-Olefine wie Ethern, Propen, n-Buten, i-Buten, n-Penten, i-Penten, n-Hexen, i-Hexen.

Cyclohexen.

In einer speziellen Ausführungsform können die weiteren copolymerisierbaren Monomeren des Kerns auch ethylenisch ungesättigte Monomere mit mindestens einer Carbonsäuregruppe, Sulfonsäuregruppe und/oder mindestens einer Phosphonsäuregruppe umfassen. Dies sind alle organische Verbindungen, die sowohl mindestens eine ethylenische Doppelbindung als auch mindestens eine Carbonsäuregruppe, Sulfonsäuregruppe und/oder mindestens eine Phosphonsäuregruppe aufweisen. Zu ihnen gehören beispielsweise:

Acrylsäure,
Methacrylsäure,
1-[2-(Isopropenylcarbonyloxy)ethyl]-maleat (Monoester aus 2-Hydroxyethylmethacrylat (HEMA) und Maleinsäure),
1-[2-(Vinylcarbonyloxy)ethyl]-maleat (Monoester aus 2-Hydroxyethylacrylat (HEA) und Maleinsäure),
1-[2-(Isopropenylcarbonyloxy)ethyl]-succinat (Monoester aus HEMA und Bernsteinsäure),
1-[2-(Vinylcarbonyloxy)ethyl]-succinat (Monoester aus HEA und Bernsteinsäure),
1-[2-(Isopropenylcarbonyloxy)ethyl]-phtalat (Monoester aus HEMA und Phthalsäure),
1-[2-(Vinylcarbonyloxy)ethyl]-phtalat (Monoester aus HEA und Phthalsäure),
1-[2-(Isopropenylcarbonyloxy)ethyl]-hexahydrophtalat (Monoester aus HEMA und Hexahydrophthalsäure),
1-[2-(Vinylcarbonyloxy)ethyl]-hexahydrophtalat (Monoester aus HEA und Hexahydrophthalsäure),
1-[2-(Isopropenylcarbonyloxy)butyl]-maleat (Monoester aus 2-Hydroxybutylmethacrylat (HBMA) und Maleinsäure),
1-[2-(Vinylcarbonyloxy)butyl]-maleat (Monoester aus 2-Hydroxybutylacrylat (HBA) und Maleinsäure),
1-[2-(Isopropenylcarbonyloxy)butyl]-succinat (Monoester aus HBMA und Bernsteinsäure),
1-[2-(Vinylcarbonyloxy)butyl]-succinat (Monoester aus HBA und Bernsteinsäure),
1-[2-(Isopropenylcarbonyloxy)butyl]-phtalat (Monoester aus HBMA und Phthalsäure),
1-[2-(Vinylcarbonyloxy)butyl]-phtalat (Monoester aus HBA und Phthalsäure),
1-[2-(Isopropenylcarbonyloxy)butyl]-hexahydrophtalat (Monoester aus HBMA und Hexahydrophthalsäure),
1-[2-(Vinyicarbonyloxy)butyl]-hexahydrophtalat (Monoester aus HBA und Hexahydrophthalsäure),
Fumarsäure,
Monoester der Fumarsäure,
Maleinsäure,
Monoester der Maleinsäure,
Crotonsäure,
Itaconsäure,
Zimtsäure,
Vinylessigsäure,
Trichloracrylsäure,
10-Hydroxy-2-decensäure,
4-Methacryloxyethyltrimethylsäure,
Styrolcarbonsäure,
2-(Isopropenylcarbonyloxy)-ethansulfonsäure,
2-(Vinylcarbonyloxy)-ethansulfonsäure,
2-(Isopropenylcarbonyloxy)-propylsulfonsäure,
2-(Vinylcarbonyloxy)-propylsulfonsäure,
2-Propen-1-sulfonsäure,
Methallylsulfonsäure,
Styrolsulfonsäure,
Styroldisulfonsäure,
Vinylphosphonsäure.

Die zuvor genannten ethylenisch ungesättigten Monomere können einzeln oder als Mischungen eingesetzt werden.

Die Mol-Anteile der vorstehend genannten Komponenten des Kerns der Latexteilchen können jeweils in den genannten Bereichen variiert werden, wobei jedoch immer zu beachten ist, dass die Summe der gewählten Anteile der Komponenten a), b) und c) zusammen 100 Mol-% ergeben muss.

Die Latexteilchen enthalten als weitere Komponente mindestens eine Schale, die in einer zweiten oder gegebenenfalls weiteren Reaktionsstufe auf dem Kern gebildet werden. Der Zusammenhalt von Kern und Schale bzw. zwischen den Schalen kann nur durch physikalische Kräfte oder aber durch kovalente Bindungen, die durch Pfropfung entstanden sind, erreicht werden.

Die erste Komponente der Schale(n) ist Methylmethacrylat. Diese Komponente liegt immer zu mindestens 20 Mol-% vor und beträgt maximal 94,9 Mol-%. Der Anteil des Methylmethacrylats kann auch 40 bis 85 Mol-% oder 50 bis 79,5 Mol-% betragen.

Als weitere Komponente enthalten die Schale(n) der Latexteilchen einen oder mehrere (Meth)acrylester, dessen Alkoholkomponente 2 - 8 Kohlenstoffatome oder einen aromatischen Rest enthält.

Beispiele für derartige Ester sind (Meth)acrylate, die sich von gesättigten Alkoholen ableiten, wie Ethyl(meth)acrylat, n-Propyl(meth)acrylat, iso-Propyl(meth)acrylat, n-Butyl(meth)acrylat, i-Butyl(meth)acrylat, tert-Butyl(meth)acrylat, Pentyl(meth)acrylat, Hexyl(meth)acrylat und Heptyl(meth)acrylat; Ethylhexyl(meth)acrylat, Octyl(meth)acrylat, isoOctyl(meth)acrylat,

Cycloalkyl(meth)acrylate, wie Cyclopentyl(meth)acrylat und Cyclohexyl(meth)acrylat;
(Meth)acrylate, die sich von ungesättigten Alkoholen ableiten, wie 2-Propinyl(meth)acrylat und Allyl(meth)acrylat, Vinyl (meth)acrylat Aryl(meth)acrylate, wie Benzylmethacrylat oder
Phenylmethacrylat, wobei die Arylreste jeweils unsubstituiert oder bis zu vierfach substituiert sein können;

Diese Ester können zu 5 - 79,9 Mol-%, zu 10 - 50 oder zu 15 - 40 Mol-%, vorliegen.

Die dritte Komponente der Schale(n) ist ein Amid der Acrylsäure und/oder der Metharylsäure .

Amide können einfache Amide, also Acrylamid oder Methacrylamid oder N-substituierte Amide der Acrylsäure und/oder der Methacrylsäure sein, welche funktionelle Gruppen der folgenden Formel tragen

$$-C(O)-NR_1R_2$$

wobei $R_1$ und $R_2$ unabhängig von einander H oder einen linearen oder verzweigten Alkylrest mit 1 -10 Kohlenstoffatomen darstellen, der gegebenenfalls auch noch zusätzlich Aminogruppen der Formel -$NR_3R_4$ enthalten kann, wobei $R_3$ und $R_4$ unabhängig voneinander H oder einen linearen oder verzweigten Alkylrest mit 1 - 10 Kohlenstoffatomen darstellen oder der Stickstoff gemeinsam mit den Substituenten $R_3$ und $R_4$ auch einen fünf- bis siebengliedrigen Ring bilden kann. Der Ring kann gegebenenfalls noch durch eine oder mehrere kurzkettige Alkylgruppen, wie beispielsweise Methyl, Ethyl oder Propyl, substituiert sein oder Heteroatome wie Stickstoff oder Sauerstoff beinhalten.

Beispiele hierfür sind N-Methyl(meth)acrylamid, N-Dimethylaminoethyl-(meth)acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dimethylamino)-2,2-dimethylpropyl]-methacrylamid, N-Dodecyl(meth)acrylamid, N-[3-Dimethylaminopropy](meth)acrylamid, N-Methacryloylmorpholin, N-Methacryloyl-2-pyrrolidinon.

Besonders bevorzugt sind Acrylamid und Methacrylamid.

Die vorstehend genannten Amide der Acrylsäure und/oder der Methacrylsäure sind zu 0,1 - 20 Mol-% Bestandteil von einer oder gegebenenfalls von mehreren Schalen des Latexteilchens. Bevorzugte Anteile sind 0,3 - 10 Mol-% oder 1 - 5 Mol-%, wobei diese Angaben auf die jeweiligen Schalen bezogen sind und sich die Anteile in verschiedenen Schalen unterscheiden können.

Die vorstehend genannten Amide der Acrylsäure und/oder der Methacrylsäure können gegebenenfalls auch nebeneinander in einer oder mehreren Schalen der Latexteilchen vorhanden sein. In diesem Fall ist der gemeinsame Anteil der Verbindungen 0,1 - 20 Mol-%. Bevorzugte Anteile sind 0,5 - 10 Mol-% oder 1 - 5 Mol-%, wobei diese Angaben auf die jeweiligen Schalen bezogen sind und sich die Anteile in verschiedenen Schalen unterscheiden können.

Als weiterer Bestandteil können die Schalen der Latexteilchen 0 - 30 Mol-%, 0 - 20 Mol-%, 0 - 10 Mol-% oder 0 - 5 Mol-% von einem oder mehreren copolymerisierbaren Monomeren enthalten. Die Anwesenheit dieser Monomeren kann in besonderen Fällen günstig sein, um gegebenenfalls bestimmte Eigenschaften der Schale der Latexteilchen gezielt einzustellen. Möglich sind alle vinylisch ungesättigte Verbindungen, die unter den gegebenen Polymerisationsbedingungen in das Polymer eingebaut werden können, das die jeweilige Schale bildet.

Hierzu gehören unter anderem

Nitrile der (Meth)acrylsäure und andere stickstoffhaltige Methacrylate, wie
Methacryloylamidoacetonitril,
2-Methacryloyloxyethylmethylcyanamid,
Cyanomethylmethacrylat;
carbonylhaltige Methacrylate, wie
Oxazolidinylethylmethacrylat,
N-(Methacryloyloxy)formamid,
Acetonylmethacrylat,
N-Methacryloylmorpholin,
N-Methacryloyl-2-pyrrolidinon;
Glycoldimethacrylate, wie 1,4-Butandiolmethacrylat, 2-Butoxyethylmethacrylat, 2-Ethoxyethoxymethylmethacrylat, 2-Ethoxyethylmethacrylat,
Methacrylate von Etheralkoholen, wie
Tetrahydrofurfurylmethacrylat,
Vinyloxyethoxyethylmethacrylat,
Methoxyethoxyethylmethacrylat,
1-Butoxypropylmethacrylat,
1-Methyl-(2-vinyloxy)ethylmethacrylat,
Cyclohexyloxymethylmethacrylat,
Methoxymethoxyethylmethacrylat,
Benzyloxymethylmethacrylat,

Furfurylmethacrylat,
2-Butoxyethylmethacrylat,
2-Ethoxyethoxymethylmethacrylat,
2-Ethoxyethylmethacrylat,
Allyloxymethylmethacrylat,
1-Ethoxybutylmethacrylat,
Methoxymethylmethacrylat,
1-Ethoxyethylmethacrylat,
Ethoxymethylmethacrylat;
Oxiranylmethacrylate, wie
2,3-Epoxybutylmethacrylat,
3,4-Epoxybutylmethacrylat,
Glycidylmethacrylat;
Phosphor-, Bor- und/oder Silicium-haltige Methacrylate, wie
2-(Dimethylphosphato)propylmethacrylat,
2-(Ethylenphosphito)propylmethacrylat,
Dimethylphosphinomethylmethacrylat,
Dimethylphosphonoethylmethacrylat,
Diethylmethacryloylphosphonat,
Dipropylmethacryloylphosphat;
schwefelhaltige Methacrylate, wie
Ethylsulfinylethylmethacrylat,
4-Thiocyanatobutylmethacrylat,
Ethylsulfonylethylmethacrylat,
Thiocyanatomethylmethacrylat,
Methylsulfinylmethylmethacrylat,
Bis(methacryloyloxyethyl)sulfid;
Trimethacrylate, wie
Trimethyloylpropantrimethacrylat;
Vinylester, wie Vinylacetat;
Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Diester der Maleinsäure, wobei die Alkoholreste 1 bis 9 Kohlenstoffatome aufweisen, Maleinsäureanhydrid, Methylmaleinsäureanhydrid, Maleinimid, Methylmaleinimid; Fumarsäurederivate, wie beispielsweise Diester der Fumarsäure, wobei die Alkoholreste 1 bis 9 Kohlenstoffatome aufweisen;
Diene wie beispielsweise Divinylbenzol.

Alpha-Olefine wie Ethen, Propen, n-Buten, i-Buten, n-Penten, i-Penten, n-Hexen, i-Hexen.

Cyclohexen.

Die zuvor genannten ethylenisch ungesättigten Monomere können einzeln oder als Mischungen eingesetzt werden.

In einer speziellen Ausführungsform können die weiteren copolymerisierbaren Monomeren der Schale (n) auch ethylenisch ungesättigte Monomere mit mindestens einer Carbonsäuregruppe, Sulfonsäuregruppe und/oder mindestens einer Phosphonsäuregruppe umfassen. Dies sind alle organische Verbindungen, die sowohl mindestens eine ethylenische Doppelbindung als auch mindestens eine Carbonsäuregruppe, Sulfonsäuregruppe und/oder mindestens eine Phosphonsäuregruppe aufweisen. Zu ihnen gehören beispielsweise:

Acrylsäure,
Methacrylsäure,
1-[2-(Isopropenylcarbonyloxy)ethyl]-maleat (Monoester aus 2-Hydroxyethylmethacrylat (HEMA) und Maleinsäure),
1-[2-(Vinylcarbonyloxy)ethyl]-maleat (Monoester aus 2-Hydroxyethylacrylat (HEA) und Maleinsäure),
1-[2-(Isopropenylcarbonyloxy)ethyl]-succinat (Monoester aus HEMA und Bernsteinsäure),

1-[2-(Vinylcarbonyloxy)ethyl]-succinat (Monoester aus HEA und Bernsteinsäure),
1-[2-(Isopropenylcarbonyloxy)ethyl]-phtalat (Monoester aus HEMA und Phthalsäure),
1-[2-(Vinylcarbonyloxy)ethyl]-phtalat (Monoester aus HEA und Phthalsäure),
1-[2-(Isopropenylcarbonyloxy)ethyl]-hexahydrophtalat (Monoester aus HEMA und Hexahydrophthalsäure),
1-[2-(Vinylcarbonyloxy)ethyl]-hexahydrophtalat (Monoester aus HEA und Hexahydrophthalsäure),
1-[2-(Isopropenylcarbonyloxy)butyl]-maleat (Monoester aus 2-Hydroxybutylmethacrylat (HBMA) und Maleinsäure),
1-[2-(Vinylcarbonyloxy)butyl]-maleat (Monoester aus 2-Hydroxybutylacrylat (HBA) und Maleinsäure),
1-[2-(Isopropenylcarbonyloxy)butyl]-succinat (Monoester aus HBMA und Bernsteinsäure),
1-[2-(Vinylcarbonyloxy)butyl]-succinat (Monoester aus HBA und Bernsteinsäure),
1-[2-(Isopropenylcarbonyloxy)butyl]-phtalat (Monoester aus HBMA und Phthalsäure),
1-[2-(Vinylcarbonyloxy)butyl]-phtalat (Monoester aus HBA und Phthalsäure),
1-[2-(Isopropenylcarbonyloxy)butyl]-hexahydrophtalat (Monoester aus HBMA und Hexahydrophthalsäure),
1-[2-(Vinylcarbonyloxy)butyl]-hexahydrophtalat (Monoester aus HBA und Hexahydrophthalsäure),
Fumarsäure,
Monoester der Fumarsäure,
Maleinsäure,
Monoester der Maleinsäure,
Crotonsäure,
Itaconsäure,
Acrylamidoglykolsäure,
Methacrylamidobenzoesäure,
Zimtsäure,
Vinylessigsäure,
Trichloracrylsäure,
10-Hydroxy-2-decensäure,
4-Methacryloxyethyltrimethylsäure,
Styrolcarbonsäure,
2-(Isopropenylcarbonyloxy)-ethansulfonsäure,
2-(Vinylcarbonyloxy)-ethansulfonsäure,
2-(Isopropenylcarbonyloxy)-propylsulfonsäure,
2-(Vinylcarbonyloxy)-propylsulfonsäure,
2-Acrylamido-2-methylpropansulfonsäure,
Acrylamidododecansulfonsäure,
2-Propen-1-sulfonsäure,
Methallylsulfonsäure,
Styrolsulfonsäure,
Styroldisulfonsäure,
Methacrylamidoethanphosphonsäure,
Vinylphosphonsäure.

Diese ethylenisch ungesättigten Monomere mit mindestens einer Carbonsäuregruppe, Sulfonsäuregruppe und/ oder mindestens einer Phosphonsäuregruppe sind jedoch in weniger als 0,5 Mol-%, bevorzugt weniger als 0,4 Mol-% und besonders bevorzugt weniger als 0,3 Mol-% enthalten. Höhere Anteile an den vorstehend genannten Monomeren sind auf Grund der hohen Polarität dieser funktionellen Gruppen schädlich für die erfindungsgemäß niedrige Wasseraufnahme und werden deshalb vermieden.

Die Mol-Anteile der vorstehend genannten Komponenten der jeweiligen Schale(n) der Latexteilchen können jeweils in den genannten Bereichen variiert werden, wobei jedoch immer zu beachten ist, dass die Summe der gewählten Anteile der Komponenten a'), b'), c') und d') innerhalb einer Schale zusammen 100 Mol-% ergeben muss.

In einer besonderen Ausführungsform besteht das Kern/Schale-Polymer aus einem Kern und einer Schale. Das Gewichtsverhältnis von Kern zu Schale kann in weiten Grenzen variiert werden und liegt zwischen 10 : 90 und 90 : 10. Dieses Gewichtsverhältnis ergibt sich aus der Einwaage der Monomeren.

Weitere Ausführungsformen können Kern/Schale-Polymerisate sein, die aus einem Kern und zwei oder mehr Schalen bestehen. Die Anzahl der Schalen beträgt in den meisten Fällen 2 oder 3, kann jedoch auch darüber liegen. Die chemische Zusammensetzung einzelner oder aller Schalen kann gleich sein oder aber gegebenenfalls unterschiedliche Monomerzusammensetzungen aufweisen.

Eine weitere bevorzugte Ausführungsform ist dadurch gekennzeichnet, dass sowohl die Komponente b) des Kerns als auch die Komponente b') von mindestens einer Schale n-Butyl(meth)acrylat, i-Butyl(meth)acrylat oder t-Butyl (meth)acrylat oder eine Mischung hieraus ist.

In einer weiteren vorteilhaften Ausführungsform enthalten die Kern/Schale-Polymerisate in mindestens einer Schale weniger als 0,5 Mol-%, bevorzugt weniger als 0,4 Mol-% und besonders bevorzugt weniger als 0,3 Mol-% eines Monomeren mit einer Carboxylgruppe oder einer Sulfonsäuregruppe oder einer Phosphonsäuregruppe.

Höhere Anteile an den vorstehend genannten Monomeren sind auf Grund der hohen Polarität dieser funktionellen Gruppen schädlich für die erfindungsgemäß niedrige Wasseraufnahme und werden deshalb vermieden. Die Schale(n) können jedoch gegebenenfalls noch weitere copolymerisierbare Monomere enthalten, bis die bereits genannte Obergrenze erreicht ist.

Aus den erfindungsgemäßen Polymerisaten können Plastisole hergestellt werden, die Kern/Schale-Polymerisate und mindestens einen Weichmacher enthalten. Weichmacher werden oft auch als Plastifizierungsmittel bezeichnet. In vielen Fällen wird die Verwendung eines einzigen Weichmachers genügen, es kann aber auch vorteilhaft sein, ein Gemisch von zwei oder mehreren verschiedenen Weichmachern zu verwenden.

Als Weichmacher besonders erwähnt seien die Phthalate, wie zum Beispiel das Diisodecylphthalat, Diethylhexylphthalat, Diisononylphtalat,

Di-C7-C11-n-alkylphthalat, Dioctylphthalat, Trikresylphosphat, Dibenzyltoluol, und Benzyloctylphthalat.

Darüber hinaus können auch andere Verbindungen wie Citrate, Phosphate und Benzoate verwendet werden.

Die genannten Weichmacher können auch als Mischungen eingesetzt werden.

Die Mengenverhältnisse in Plastisolpasten können in weiten Bereichen variieren. In typischen Rezepturen sind die Weichmacher in Anteilen von 50 bis 300 Gew.-Teilen, auf 100 Gew.-Teile des Kern/Schale-Polymerisats enthalten. Zur Anpassung an die rheologischen Anforderungen - insbesondere bei der Verarbeitung der Plastisole - können zudem Lösungsmittel (wie zum Beispiel Kohlenwasserstoffe) als Verdünner eingesetzt werden.

Weiter enthalten die Plastisole gewöhnlich noch anorganische Füllstoffe in Mengen von 0-300 Gew.-Teilen. Genannt seien beispielsweise Calciumcarbonat (Kreide), Titandioxid, Calciumoxid, gefällte und gecoatete Kreiden als rheologisch wirksame Additive, ferner gegebenenfalls Thixotropierungsmittel wie z. B. pyrogene Kieselsäure. Oftmals werden dem Plastisol außerdem Haftvermittler in Mengen von 40-120 Gew.-Teilen zugesetzt; verwendet werden beispielsweise Polyaminoamide oder blockierte Isocyanate.

Selbstvernetzende blockierte Isocyanate, als besonders effektive Haftvermittler in der Anwendung bei Bereich Poly(meth)acrylat-Plastisolen werden zum Beispiel in EP 1371674 beschrieben.

Die Plastisole können anwendungsbedingt noch weitere plastisolübliche Bestandteile (Hilfsstoffe) wie Netzmittel, Stabilisatoren, Verlaufsmittel, Pigmente, Treibmittel enthalten.

Erwähnt seien z. B. Calciumstearat als Verlaufsmittel.

Prinzipiell kann die Mischung der Komponenten für die erfindungsgemäßen Plastisole mit verschiedenartigen Mischern vorgenommen werden. Im Einklang mit den Erfahrungen bei PVC- und Poly(meth)acrylat-Plastisolen werden jedoch langsam laufende Planeten-Rührwerke, Hochgeschwindigkeits-Mischer bzw. Dissolver, Horizontal-Turbomischer und Dreiwalzenwerke bevorzugt; wobei die Wahl von der Viskosität der erzeugten Plastisole beeinflußt wird.

Die Plastisol-Masse kann typischerweise in Schichtstärken von 0,05 - 5 mm bei Temperaturen von 100 - 220 °C (vorzugsweise 120 - 160 °C) innerhalb von weniger als 30 Minuten geliert werden.

Bevorzugt werden als Auftragungsmodus für die Beschichtung von Metallteilen derzeit Spritzverfahren, z. B. Pastenspritzverfahren. Dabei wird das Plastisol gewöhnlich mit hohen Drücken (ca. 300 - 400 bar) über airless-Spritzpistolen verarbeitet.

Im besonders wichtigen Anwendungsbereich Automobilherstellung /Unterbodenschutz wird gewöhnlich so verfahren, dass das Plastisol nach der Elektrotauchlackierung der Karosserie und erfolgter Trocknung aufgetragen wird. Die thermische Härtung geschieht gewöhnlich in einem Heizofen (z.B. Umluftofen) bei üblichen Verweilzeiten - abhängig von der Temperatur -im Bereich 10 - 30 Minuten und Temperaturen zwischen 100 und 200 °C, vorzugsweise 120 - 160 °C. Die kataphoretische Beschichtung von metallischen Substraten ist vielfach beschrieben worden (vgl. DE-A 27 51 498, DE-A 27 53 861, DE-A 27 32 736, DE-A 27 33 188, DE-A 28 33 786).

Die vorliegenden Kern/Schale-Polymerisate sind dadurch gekennzeichnet, dass deren Wasseraufnahme weniger als 3,0 % beträgt. In besonderen Ausführungsformen können die Kern/Schale-Polymerisate auch eine Wasseraufnahme von weniger als 2,0 %, weniger als 1,5 % oder weniger als 1,0% aufweisen. In einer besonders bevorzugten Ausführungsform beträgt die Wasseraufnahme der Kern/Schale-Polymerisate weniger als 0,8 % oder weniger als 0,5 %.

Die Bestimmung der Wasseraufnahme erfolgt durch eine im Rahmen der vorliegenden Offenbarung beschriebenen Methode, bei der die entsprechenden Polymerisatproben getrocknet und bei einem definierten Normklima gelagert werden. Die Bestimmung der Wasseraufnahme erfolgt durch Differenzwägung in der beschriebenen Weise.

Die unter Verwendung der erfindungsgemäßen Kern/Schale-Polymerisate herrgestellten Plastisolpasten weisen ebenfalls eine geringe Wasseraufnahme auf.

Eine geringe Wasseraufnahme von Polymerpulver bzw. Plastisolpaste stellt einen erheblichen Verarbeitungsvorteil dar, da keine Beeinträchtigungen der Filmqualität durch Blasenbildung auftreten, wenn das Pulver oder die Paste beispielsweise bei der Lagerung oder der Verarbeitung feuchter Luft ausgesetzt sind.

Das Verfahren zur Herstellung der Plastisole auf Basis eines Kern/Schale-Polymerisats ist dadurch gekennzeichnet, dass

a) das Kern/Schale-Polymer durch Emulsionspolymerisation, die gegebenenfalls mehrstufig ist, hergestellt wird,

b) die entstandene Dispersion getrocknet und

c) anschließend mit mindestens einem Weichmacher und gegebenenfalls mit Haftvermittlern und/oder Füllstoffen und gegebenenfalls weiteren plastisolüblichen Bestandteilen versetzt wird.

Geeignete Mischungsverhältnisse sind 100 Mol-Teile Kern/Schale-Polymer mit 50 - 300 Mol-Teilen Weichmacher, 40 -120 Mol-Teilen Haftvermittler und/oder 0 - 300 Mol-Teilen Füllstoffen

Die Herstellung der Kern/Schale-Polymerisate kann durch Emulsionspolymerisation erfolgen. Diese Methode ist dem Fachmann bekannt und in Standardwerken ausführlich beschrieben.

Die Herstellung der Kern/Schale-Polymerisate kann in an sich bekannter Weise erfolgen, bevorzugt durch Emulsionspolymerisation, die gegebenenfalls mehrstufig ausgeführt werden kann.

Bei Anwendung der Emulsionspolymerisation kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge - bezogen auf das Polymerisat - 2,5 Gew.-% nicht überschreiten.

Als Initiator können neben den in der Emulsionspolymerisation üblichen Verbindungen, wie z. B. Perverbindungen wie Wasserstoffperoxid, Ammoniumperoxidisulfat (APS) auch Redoxsysteme wie Natriumdisulfit-APS-Eisen sowie wasserlösliche Azo-Starter verwendet werden. Die Initiatormenge liegt im allgemeinen bei 0,005 bis 0,5 Gew.-%, bezogen auf das Polymerisat.

Die Polymerisationstemperatur richtet sich innerhalb gewisser Grenzen nach den Initiatoren. So arbeitet man bei Anwendung von APS vorteilhaft im Bereich von 60 - 90 °C. Bei Einsatz von Redoxsystemen kann auch bei tieferen Temperaturen, beispielsweise bei 30 °C polymerisiert werden. Neben Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation gestartet. Das Monomer-Wasser-Verhältnis muß dabei der freiwerdenden Reaktionswärme angepaßt werden. In der Regel treten keine Schwierigkeiten auf, wenn man eine 50 %-ige Emulsion so erzeugt, daß man zunächst die Häfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Häfte der Monomeren zusammen mit den Hilfsstoffen zusetzt.

Die aus diesem Verfahren erhaltenen Primärpartikel haben typischerweise eine durchschnittliche Partikelgröße von 250 bis 1000 nm, die z.B. durch Laserbeugung bestimmt werden kann.

Die Gewinnung der Bindemittel in fester Form kann in herkömmlicher Weise durch Gefriertrocknung, Ausfällen oder vorzugsweise Sprühtrocknung vorgenommen werden.

Die Sprühtrocknung der Dispersionen kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat eine Temperatur von 100 bis 250, vorzugsweise von 150 - 250 °C. Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabschneider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 - 90 °C gut geeignet.

Die Austrittstemperatur läßt sich bei konstantem Luftstrom durch Variation der kontinuierlich je Zeiteinheit eingesprühten Dispersionsmenge regeln.

Dabei kommt es meist zur Bildung von Sekundärteilchen, die aus agglomerierten Primärpartikel bestehen. Unter Umständen kann es vorteilhaft sein, dass die einzelnen Latexteilchen beim Trocknen miteinander zu größeren Einheiten verkleben (partielle Verglasung). Als Richtwert für die durchschnittlichen Korngrößen der agglomerierten Einheiten (gemessen beispielsweise mit der Methode der Laserbeugung) kann man 5 - 250 μm annehmen.

Die erfindungsgemäß hergestellten Plastisole eignen sich insbesondere für die Verwendung als Unterbodenschutz und zur Nahtabdichtung vor allem im Automobilbau.

Ein weiteres vorteilhaftes Anwendungsgebiet der erfindungsgemäßen Produkte ist die Beschichtung von Bauteilen (wie z.B. Karosseriebestandteilen) zur akustischen Schalldämpfung.

Desweiteren sind zahlreiche andere Anwendungen möglich, vor allem solche in denen schon bisher Plastisole auf PVC-Basis eingesetzt werden.

Bestimmungsmethoden:

Bestimmung der Wasseraufnahme des Polymerisatpulvers:

Die Beurteilung der Wasseraufnahme wurde angelehnt an die Norm DIN EN ISO 62 zur Bestimmung der Wasseraufnahme durchgeführt.

Dazu wurden die Polymerpulver bei 60°C in einem Vakuumtrockenschrank getrocknet, bis der Trocknungsverlust (gemessen mit einem Mettler-Halogentrockner HR73) unter 0,1 % lag.

Dann wurde eine Probe von ungefähr 25 g Polymerpulver exakt auf ein Uhrglas (Durchmesser $\varnothing$ = 120 mm) eingewogen (Wägeungenauigkeit höchstens 0,1 mg). Diese Probe wurde für 7 Tage in Normklima 23/50 (DIN EN ISO 291) gelagert. Nach dieser Lagerung wurde die Gewichtszunahme des Polymeren durch Auswaage des Polymeren bestimmt und nach der Formel

$$\text{Gewichtszunahme in \%} \approx \frac{\text{Auswaage - Einwaage}}{\text{Einwaage}} * 100$$

berechnet.

Bestimmung der Wasseraufnahme der Platisolpaste:

Die Herstellung der Plastisolpaste zur Beurteilung der Wasseraufnahme erfolgt in einem Dissolver analog der in DIN 11468 für Polyvinylchlorid-Pasten festgelegten Verfahren.

Verwendet wurden folgende Komponenten :

- 100 Gewichtsteile Bindemittel (Kern/Schale-Polymerisat)
- 100 Gewichtsteile Weichmacher (Diisononylphthalat)

Die Plastisolpaste wurde mit einem Rakel auf einer Fläche von 80 mm x 80 mm mit einer Dicke von 2 mm auf eine dünne Metallplatte (Dicke ca. 1 mm) aufgetragen.

Diese Metallplatte wurde 10 Tage bei 30°C in einer Atmosphäre mit 80% relativer Luftfeuchtigkeit gelagert. Anschließend wurde das Plastisol in einem 150°C heißen Ofen während 60 Minuten ausgeliert.

Die Beurteilung der Wasseraufnahme erfolgte qualitativ anhand der optischen Beurteilung der Filmoberfläche; hohe Wasseraufnahme zeigte sich in Unebenheiten und Blasen, während gute Proben eine glatte, fehlerfreie Oberfläche aufwiesen.

Bestimmung der Kältflexibilität

Die Beurteilung der Kältflexibilität erfolgt in Anlehnung an DIN 53152 ("Dornbiegeversuch an Anstrichen und ähnlichen Beschichtungen.").

Zunächst wird (analog dem in DIN 11468 für Polyvinylchlorid-Pasten festgelegten Verfahren) in einem Dissolver eine Plastisolpaste, bestehend aus gleichen Gewichtsteilen Bindemittel und Weichmacher (Diisononylphthalat) hergestellt.

Diese wird in einer Dicke von 2 mm auf eine mit Teflon-Spray behandelte Metallplatte aufgetragen und 60 Minuten bei 150°C in einem Elektroofen ausgeliert.

Nach dem Abkühlen wird der Film von dem Substrat abgehoben und mindestens 12 Stunden bei bei -25°C gelagert.

Anschließend wird der Film über einen 12 mm dicken Dorn gebogen.

Ein sehr gut kälteflexibler Plastisolfilm erträgt diese Behandlung ohne sichtbare Schäden.

Bei etwas schlechter kälteflexiblen Filmen zeigt sich ein Weißbruch, der noch reversibel sein kann.

Bei schlecht kälteflexiblen Plastisolfilmen zeigen sich feine Risse oder gar ein Bruch des Materials.

Bestimmung der Abriebsfestigkeit

Die Abriebsfestigkeit ist ein herausragendes Qualitätskriterium für Plastisole. Eine häufig verwendete Meßmethode wird in EP 1371674 beschrieben. Der dort dargestellte Chipping-Resistance-Test beruht auf einer Methode, bei der die zu untersuchende Beschichtung mit einer definierten Schichtdicke auf einen Träger (zumeist ein Blech) aufgetragen wird. Unter einem definierten Winkel werden dann aus einer definierten Höhe Schraubenmuttern auf die Beschichtung fallen gelassen. Die Menge an Schraubenmuttern, die die Beschichtung aushält, bevor das darunterliegende Material zum Vorschein kommt wird als Messwert für die Abriebsfestigkeit herangezogen.
Hohe Werte entsprechen guten Abriebsfestigkeiten.

Bestimmung der Lagerstabilität

Als Maß für die Lagerstabilität wird der Anstieg der Viskosität einer Plastisolpaste über einen definierten Zeitraum bei definierter Lagerung herangezogen.
Analog zu dem in DIN 11468 beschriebenen Verfahren wird aus gleichen Teilen Weichmacher und Bindemittel eine Plastisolpaste hergestellt. Die Viskosität $V_I$ des frisch hergestellten Plastisols wird gemessen; anschließend wird die Paste in einem verschlossenen Behälter für 7 Tage bei 35°C gelagert.
Dann wird die Viskosität $V_E$ der gelagerten Paste gemessen.
Der Anstieg der Viskosität in Prozent errechnet sich gemäß der Formel :

$$(V_E - V_I)/(V_I)*100$$

Beispiel 1

In einem mittels Wasserbad temperierbaren 5-Liter-Reaktor mit Rührer, Rückflusskühler, Thermometer und Dosierpumpe werden unter Stickstoffatmosphäre 1100 g Wasser vorgelegt. Unter Rühren wird auf 74°C-76°C vorgeheizt.
Zur Initiierung werden 30 ml einer 5%-igen wässrigen Lösung Natriumperoxodisulfat und 30 ml einer 5%-igen wässrigen Lösung Natriumhydrogensulfit zugesetzt.
Anschließend wird im Verlauf einer Stunde eine Monomeremulsion, bestehend aus 500g Methylmethacrylat, 250 g iso-Butylmethacrylat und 250 g n-Butylmethacrylat, sowie 8 g Sulfobernsteinsäure-bis-2-ethylhexylester (Natriumsalz) und 450 ml deionisiertem Wasser, zugetropft.
Nach beendeter Zudosierung wird 30 min gerührt und anschließend werden weitere 15 ml einer 5%-igen wässrigen Lösung Natriumperoxodisulfat und 15 ml einer 5%-igen wässrigen Lösung Natriumhydrogensulfit zugegeben.
Es wird eine zweite Monomeremulsion bestehend aus 700 g Methylmethacrylat, 130 g iso-Butylmethacrylat, 130 g n-Butylmethacrylat, 40 g Methacrylamid und 8 g Sulfobernsteinsäure-bis-2-ethylhexylester (Natriumsalz) und 450 ml deionisiertem Wasser innerhalb einer Stunde zudosiert. Ein Anstieg der Reaktionstemperatur über 80°C wird mittels Wasserbadkühlung vermieden.
Nach Zugabe der Emulsion wird die Temperatur während einer Nachreaktionszeit von 30 min zwischen 75°C und 80°C gehalten, bevor die entstandene Dispersion auf Raumtemperatur abgekühlt wird.
In einem Trockenturm mit Zentrifugalzerstäuber wird die Polymerdispersion in ein Pulver überführt. Die Turmaustrittstemperatur beträgt dabei 80°C; die Umdrehungsgeschwindigkeit der Zerstäuberscheibe beträgt 20000 min-1.

Vergleichsbeispiel 2

Das Vorgehen ist analog zu Beispiel 1, mit dem Unterschied, dass anstelle von 40 g Methacrylamid weitere 40 g Methylmethacrylat eingesetzt werden.

Vergleichsbeispiel 3

Das Vorgehen ist analog zu Beispiel 1, mit dem Unterschied, dass anstelle von 40 g Methacrylamid 40 g Methacrylsäure eingesetzt werden.

Beurteilung der Lagerstabilität

Die Pasten aus den Bindemitteln nach Beispiel 1 und Vergleichsbeispiel 3 weisen eine gute Lagerstabilität auf.

Der Anstieg der Viskosität im Versuchszeitraum ist kleiner als 10%.
Das Bindemittel nach Vergleichsbeispiel 2 weist eine sehr schlechte Lagerstabilität auf. Die Viskosität steigt innerhalb von 7 Tagen auf mehr als den doppelten Wert.

Beurteilung der Wasseraufnahme

Das Bindemittel-Pulver nach Beispiel 1 weist nach der oben beschriebenen Methode eine Wasseraufnahme von 0,92 % auf.
Die Paste ergibt nach Ausgelierung einen glatten, fehlerfreien Film ohne Blasen.
Die Wasseraufnahme des Vergleichsbeispieles 3 mit Methacrylsäure ist deutlich höher.

Beurteilung der Kälteflexibilität

Die beste Kälteflexibilität weist das Vergleichsbeispiel 2 auf, das keine stabilisierenden Monomere in der Schale enthält; dieser Film zeigt beim Dornbiegeversuch keine erkennbaren Schäden.
Die Kälteflexibilität des erfindungsgemäßen Plastisols mit dem Bindemittel nach Beispiel 1 weist eine schlechtere aber durchaus akzeptable Kälteflexibilität auf : es ist lediglich ein leichter, reversibler Weißbruch zu erkennen.
Das Plastisol aus dem Bindemittel nach Vergleichsbeispiel 3 weist eine schlechte Kälteflexibilität auf : beim Biegeversuch zeigt sich eine deutliche Rissbildung.

Beurteilung der Abriebsfestigkeit

Im Verlgleich der aus den Bindemitteln nach Beispiel 1 und Vergleichsbeispiel 3 hergestellten Plastisolen zeigt der erfindungsgemäße Plastisolfilm eine 12% höhere Abriebsfestigkeit.

Zusammenfassung der Beispiele

Man erkennt an der Lagerstabilität, daß ein stabilisierendes Monomer in der Schale vorhanden sein muß; diese Funktion erfüllen sowohl Methacrylsäure als auch Methacrylamid. Das Bindemittel nach Vergleichsbeispiel 2 erfüllt diese Anforderung nicht.
Während die Methacrylsäure jedoch einen schlechten Einfluß auf Wasseraufnahme, Abriebsbeständigkeit und Kälteflexibilität ausübt, ist dieser Einfluß bei Methacrylamid erheblich schwächer ausgeprägt.

**Patentansprüche**

1. Kern/Schale-Polymerisat, bestehend aus Latexteilchen mit einer Primärteilchengröße von mindestens 250 nm, wobei der Kern besteht aus

    a) 20 - 85 Mol-% Methylmethacrylat
    b) 15 - 80 Mol-% (Meth)acrylester, dessen Alkoholkomponente
    2 - 8 Kohlenstoffatome oder einem aromatischen Rest enthält
    c) 0 - 30 Mol-% weiteren copolymerisierbaren Monomeren,

ausgenommen N-haltige Verbindungen,
wobei a), b) und c) zusammen 100 Mol-% ergeben
und mindestens einer Schale, bestehend jeweils aus

    a') 20 - 94,9 Mol-% Methylmethacrylat
    b') 5 - 79,9 Mol-% (Meth)acrylester, dessen Alkoholkomponente 2 - 8 Kohlenstoffatomen oder einem aromatischen Rest enthält
    c') 0,1 - 20 Mol-% eines Amides der (Meth)acrylsäure, und/oder eines aminsubstituierten Alkylesters der (Meth)acrylsäure, wobei die Komponente $c^1$ nm mindestens einer Schale eine (Meth)acrylverbindung ist, die die folgende Gruppe trägt:

$$-C(O)-NR_1R_2$$

mit $R_1$ und $R_2$ unabhängig voneinander H oder einen linearen oder verzweigten Alkylrest mit 1 - 10 Kohlenstoffatomen darstellen, der gegebenenfalls auch noch zusätzlich Aminogruppen der Formel -$NR_3R_4$ enthalten kann, wobei $R_3$ und $R_4$ unabhängig voneinander H oder einen linearen oder verzweigten Alkylrest mit 1 - 10 Kohlenstoffatomen darstellen oder der Stickstoff gemeinsam mit den Substituenten $R_3$ und $R_4$ auch einen fünf- bis siebengliedrigen Ring bilden kann

d') 0 - 30 % Mol-% weiteren copolymerisierbaren Monomeren

wobei a'), b'), c') und d') einer Schale jeweils zusammen 100 Mol-% ergeben.

2. Kern/Schale-Polymerisat gemäß Anspruch 1,
   **dadurch gekennzeichnet,**
   **dass** die Latexteilchen aus einem Kern und einer Schale im Gewichtsverhältnis von Kern zu Schale zwischen 10 : 90 und 90 : 10 bestehen.

3. Kern/Schale-Polymerisat gemäß Anspruch 1,
   **dadurch gekennzeichnet,**
   **dass** der Kern zwei Schalen mit gegebenenfalls unterschiedlichen Monomerzusammensetzungen trägt.

4. Kern/Schale-Polymerisat nach einem der vorstehenden Ansprüche,
   **dadurch gekennzeichnet,**
   **dass** die Komponente b) des Kerns entweder n-Butyl(meth)acrylat, i-Butyl(meth)acrylat oder t-Butyl(meth)acrylat oder eine Mischung hieraus ist.

5. Kern/Schale-Polymerisat nach einem der vorstehenden Ansprüche,
   **dadurch gekennzeichnet,**
   **dass** sowohl die Komponente b) des Kerns als auch die Komponente b') von mindestens einer Schale n-Butyl(meth)acrylat, i-Butyl(meth)acrylat oder t-Butyl(meth)acrylat oder eine Mischung hieraus ist.

6. Kern/Schale-Polymerisat nach einem der Ansprüche 1 - 5,
   **dadurch gekennzeichnet,**
   **dass** die Komponente c') der Schale Acrylamid, Methacrylamid oder eine Mischung aus beiden darstellt.

7. Kern/Schale-Polymerisat nach einem der vorstehenden Ansprüche,
   **dadurch gekennzeichnet,**
   **dass** die Komponente d') von mindestens einer Schale besteht aus

   - weniger als 0,5 Mol-% eines Monomeren mit einer Carboxylgruppe oder einer Sulfonsäuregruppe oder einer Phosphonsäuregruppe und
   - gegebenenfalls weiteren copolymerisierbaren Monomeren.

8. Kern/Schale-Polymerisat nach einem der vorstehenden Ansprüche,
   **dadurch gekennzeichnet,**
   **dass** die Wasseraufnahme des Polymerisats geringer als 3,0 % ist.

9. Plastisol, enthaltend ein Kern/Schale-Polymerisat gemäß einem der vorstehenden Ansprüche und mindestens einen Weichmacher.

10. Plastisol nach Anspruch 9,
    **dadurch gekennzeichnet,**
    **dass** mindestens einer der Weichmacher ein Dialkylphthalat ist.

11. Verfahren zur Herstellung von Plastisolen auf Basis eines Kern/Schale-Polymerisats gemäß den Ansprüchen 1 - 8,
    **dadurch gekennzeichnet,**
    **dass**

    a) das Kern/Schale-Polymerisat durch Emulsionspolymerisation, die gegebenenfalls mehrstufig ist, hergestellt wird,
    b) die entstandene Dispersion getrocknet und
    c) anschließend mit mindestens einem Weichmacher und gegebenenfalls mit Haftvermittlern und/oder Füllstoffen und gegebenenfalls weiteren plastisolüblichen Bestandteilen versetzt wird.

12. Verfahren zur Herstellung von Plastisolen gemäß Anspruch 11,
**dadurch gekennzeichnet,**
**dass** 100 Gew.-Teile Kern/Schale-Polymer mit 50 - 300 Gew.-Teilen Weichmacher, 40 - 120 Gew.-Teilen Haftvermittler und/oder 0 - 300 Gew.-Teilen Füllstoffen versetzt werden.

13. Verfahren zur Herstellung von Plastisolen gemäß den Ansprüchen 11 und 12,
**dadurch gekennzeichnet,**
**dass** die Dispersionen mittels Sprühtrocknung getrocknet werden.

14. Verwendung von Plastisolen gemäß den Ansprüchen 9 - 10 als Unterbodenschutz, zur Nahtabdichtung oder zur akustischen Schalldämpfung.

**Claims**

1. Core/shell polymer consisting of latex particles having a primary particle size of at least 250 nm, the core consisting of

   a) 20-85 mol% of methyl methacrylate
   b) 15-80 mol% of (meth)acrylic ester whose alcohol component contains 2-8 carbon atoms or an aromatic radical
   c) 0-30 mol% of further copolymerizable monomers,

   excluding N-containing compounds,
   where a), b) and c) together add up to 100 mol%, and at least one shell consisting in each case of

   a') 20-94.9 mol% of methyl methacrylate
   b') 5-79.9 mol% of (meth)acrylic ester whose alcohol component contains 2-8 carbon atoms or an aromatic radical
   c') 0.1-20 mol% of an amide of (meth)acrylic acid and/or of an amine-substituted alkyl ester of (meth)acrylic acid, where component c') of at least one shell is a (meth)acrylic compound which bears the following group:

   $$-C(O)-NR_1R_2$$

   where $R_1$ and $R_2$ are each independently H or a linear or branched alkyl radical which has 1-10 carbon atoms and may optionally also additionally contain amino groups of the formula $-NR_3R_4$ where $R_3$ and $R_4$ are each independently H or a linear or branched alkyl radical having 1-10 carbon atoms, or the nitrogen together with the substituents $R_3$ and $R_4$ may also form a five- to seven-membered ring
   d') 0-30% mol% of further copolymerizable monomers,

   where a'), b'), c') and d') of one shell in each case add up to 100 mol%.

2. Core/shell polymer according to Claim 1,
**characterized in that**
the latex particles consist of a core and a shell in a weight ratio of core to shell between 10:90 and 90:10.

3. Core/shell polymer according to Claim 1,
**characterized in that**
the core bears two shells having identical or different monomer compositions.

4. Core/shell polymer according to one of the preceding claims,
**characterized in that**
component b) of the core is either n-butyl (meth)acrylate, i-butyl (meth)acrylate or t-butyl (meth)acrylate or a mixture thereof.

5. Core/shell polymer according to one of the preceding claims,
**characterized in that**
both component b) of the core and component b') of at least one shell is n-butyl (meth)acrylate, i-butyl(meth)acrylate or t-butyl (meth)acrylate or a mixture thereof.

**6.** Core/shell polymer according to one of Claims 1-5,
**characterized in that**
component c') of the shell is acrylamide, methacrylamide or a mixture of the two.

**7.** Core/shell polymer according to one of the preceding claims,
**characterized in that**
component d') of at least one shell consists of

- less than 0.5 mol% of a monomer having a carboxyl group or a sulphonic acid group or a phosphonic group and
- optionally further copolymerizable monomers.

**8.** Core/shell polymer according to one of the preceding claims,
**characterized in that**
the water absorption of the polymer is less than 3.0%.

**9.** Plastisol comprising a core/shell polymer according to one of the preceding claims and at least one plasticizer.

**10.** Plastisol according to Claim 9,
**characterized in that**
at least one of the plasticizers is a dialkyl phthalate.

**11.** Process for preparing plastisols based on a core/shell polymer according to Claims 1-8,
**characterized in that**

a) the core/shell polymer is prepared by emulsion polymerization which may be multistage,
b) the resulting dispersion is dried and
c) subsequently admixed with at least one plasticizer and optionally with adhesion promoters and/or fillers and optionally further constituents customary for plastisols.

**12.** Process for preparing plastisols according to Claim 11,
**characterized in that**
100 parts by weight of core/shell polymer are admixed with 50-300 parts by weight of plasticizers, 40-120 parts by weight of adhesion promoters and/or 0-300 parts by weight of fillers.

**13.** Process for preparing plastisols according to Claims 11 and 12,
**characterized in that**
the dispersions are dried by means of spray-drying.

**14.** Use of plastisols according to Claims 9-10 as underbody protection, for seam sealing or for acoustic sound-deadening.


**Revendications**

**1.** Produit de polymérisation à noyau-enveloppe, consistant en particules de latex ayant une taille de particule primaire de moins de 250 nm, le noyau étant constitué de

a) 20-85 % en moles de méthacrylate de méthyle
b) 15-80 % en moles d'ester d'acide (méth)acrylique dont le composant alcool comporte 2-8 atomes de carbone ou un radical aromatique
c) 0-30 % en moles d'autres monomères copolymérisables,

à l'exception de composés azotés,
a), b) et c) faisant au total 100 % en moles
et en au moins une enveloppe constituée chaque fois de

a') 20-94,9 % en moles de méthacrylate de méthyle,
b') 5-79,9 % en moles d'ester d'acide (méth)acrylique dont le composant alcool comporte 2-8 atomes de carbone ou un radical aromatique

c') 0,1-20 % en moles d'un amide de l'acide (méth)acrylique et/ou d'un ester alkylique, amino-substitué, de l'acide (méth)acrylique, le composant c' d'au moins une enveloppe étant un composé (méth)acrylique qui porte le groupe suivant :

$$-C(O)-NR_1R_2$$

où $R_1$ et $R_2$ représentent, indépendamment l'un de l'autre, H ou un radical alkyle linéaire ou ramifié ayant 1-10 atomes de carbone, qui éventuellement peut également contenir encore des groupes amino supplémentaires de formule $-NR_3R_4$, $R_3$ et $R_4$ représentant, indépendamment l'un de l'autre, H ou un radical alkyle linéaire ou ramifié ayant de 1 à 10 atomes de carbone ou l'atome d'azote peut également former, conjointement avec les substituants $R_3$ et $R_4$, un cycle à 5-7 chaînons
d') 0-30 % en moles d'autres monomères copolymérisables

a'), b'), c') et d') d'une enveloppe faisant chaque fois ensemble 100 % en moles.

2. Produit de polymérisation à noyau-enveloppe selon la revendication 1, **caractérisé en ce que** les particules de latex consistent en un noyau et une enveloppe en un rapport pondéral du noyau à l'enveloppe compris entre 10:90 et 90:10.

3. Produit de polymérisation à noyau-enveloppe selon la revendication 1, **caractérisé en ce que** le noyau porte deux enveloppes à compositions éventuellement différentes en monomères.

4. Produit de polymérisation à noyau-enveloppe selon l'une quelconque des revendications précédentes, **caractérisé en ce que** le composant b) du noyau est soit le (méth)acrylate de n-butyle, soit le (méth)acrylate d'isobutyle ou le (méth)acrylate de tert-butyle ou un mélange de ceux-ci.

5. Produit de polymérisation à noyau-enveloppe selon l'une quelconque des revendications précédentes, **caractérisé en ce qu'**aussi bien le composant b) du noyau que le composant b') d'au moins une enveloppe consistent en (méth)acrylate de n-butyle, (méth)acrylate d'isobutyle ou (méth)acrylate de tert-butyle ou en un mélange de ceux-ci.

6. Produit de polymérisation à noyau-enveloppe selon l'une quelconque des revendications 1 à 5, **caractérisé en ce que** le composant c') de l'enveloppe est l'acrylamide, le méthacrylamide ou un mélange des deux.

7. Produit de polymérisation à noyau-enveloppe selon l'une quelconque des revendications précédentes, **caractérisé en ce que** le composant d' d'au moins une enveloppe est constitué

- de moins de 0,5 % en moles d'un monomère comportant un groupe carboxy ou un groupe sulfo ou un groupe phosphono et
- éventuellement d'autres monomères copolymérisables.

8. Produit de polymérisation à noyau-enveloppe selon l'une quelconque des revendications précédentes, **caractérisé en ce que** l'absorption d'eau du produit de polymérisation est inférieure à 3,0 %.

9. Plastisol, contenant un produit de polymérisation à noyau-enveloppe selon l'une quelconque des revendications précédentes et au moins un plastifiant.

10. Plastisol selon la revendication 9, **caractérisé en ce qu'**au moins l'un des plastifiants est un phtalate de dialkyle.

11. Procédé pour la préparation de plastisols à base d'un produit de polymérisation à noyau-enveloppe selon les revendications 1 à 8, **caractérisé en ce que**

a) le produit de polymérisation à noyau et enveloppe est préparé par polymérisation en émulsion, qui est éventuellement en plusieurs étapes,
b) la dispersion résultante est séchée et
c) éventuellement est ensuite additionnée d'un plastifiant et éventuellement de promoteurs d'adhérence et/ou de charges et éventuellement d'autres composants solubles dans le plastisol.

12. Procédé pour la préparation de plastisols selon la revendication 11, **caractérisé en ce qu'**on mélange 100 parties en poids de polymère à noyau/enveloppe avec 50-300 parties en poids de plastifiant, 40-120 parties en poids de promoteur d'adhérence et/ou 0-300 parties en poids de charges.

13. Procédé pour la préparation de plastisols selon les revendications 11 et 12, **caractérisé en ce que** les dispersions sont séchées par séchage par atomisation.

14. Utilisation de plastisols selon les revendications 9-10, en tant que protection de bas de caisse, pour l'étanchéification de joint ou pour l'insonorisation acoustique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 60258241 A
- JP 61185518 A
- JP 61207418 A
- JP 5255563 A
- JP 5279539 A
- EP 1162217 A
- JP 6322225 A
- JP 53144950 A
- JP 7233299 A
- JP 8295850 A
- EP 1371674 A
- DE 2751498 A
- DE 2753861 A
- DE 2732736 A
- DE 2733188 A
- DE 2833786 A